# EUROPÄISCHE PATENTSCHRIFT

(11) **EP 4 197 730 B1**
(45) Veröffentlichungstag und Bekanntmachung des Hinweises auf die Patenterteilung: **07.08.2024**
(21) Anmeldenummer: 21215927.1
(22) Anmeldetag: 20.12.2021
(51) Int. Cl.: B29B 7/80, B29B 7/74, B29B 7/76, B29C 44/34, B29B 7/40, B29B 7/58, B29K 75/00

(54) **VENTILVORRICHTUNG FÜR DAS INJIZIEREN VON GAS IN EINE MISCHKAMMER EINER KUNSTSTOFF-DOSIERVORRICHTUNG, SOWIE DARAUF BEZOGENE KUNSTSTOFF-DOSIERVORRICHTUNG**
VALVE DEVICE FOR INJECTING OF GAS INTO A MIXING CHAMBER OF A PLASTIC DOSING DEVICE, AND RELATED PLASTIC DOSING DEVICE
DISPOSITIF SOUPAPE POUR L'INJECTION DU GAZ DANS UNE CHAMBRE DE MÉLANGE D'UN DISPOSITIF DE DOSAGE EN MATIÈRE PLASTIQUE, AINSI QUE DISPOSITIF DE DOSAGE EN MATIÈRE PLASTIQUE ASSOCIÉ

(43) Veröffentlichungstag der Anmeldung: 21.06.2023
(73) Patentinhaber: Henkel AG & Co. KGaA, 40589 Düsseldorf (DE)
(72) Erfinder: Metzler, Mario, 6890 Lustenau (AT); Baldauf, Guenter, 6914 Hohenweiler (AT); Schneider, Pascal, 6900 Möggers (AT)

(56) Entgegenhaltungen:
- EP-A2- 1 958 750
- WO-A1-2016/087969
- WO-A1-2017/004637
- DE-A1- 102011 009 034
- DE-U1- 202008 014 823
- US-A1- 2009 236 025
- US-A1- 2020 307 026

## Beschreibung

Die Erfindung betrifft eine Ventilvorrichtung zum Injizieren von Gas in eine Mischkammer einer Kunststoff-Dosiervorrichtung. Des Weiteren betrifft die Erfindung eine Kunststoff-Dosiervorrichtung zum vorzugsweise diskontinuierlichen Ausdosieren eines aufgeschäumten oder aufschäumbaren Kunststoffes.

Die WO 2017/004637 A1 offenbart eine Kunststoff-Dosiervorrichtung mit einer Mischkammer, in der die Kunststoffkomponenten Polyol und Isocyanat zur Herstellung von Polyurethan vermischt werden können. Das Polyurethan kann dabei aus einer verschließbaren Auslassöffnung der Mischkammer durch eine Düse ausdosiert werden. Um ein Aufschäumen des Polyurethans zu begünstigen, wird das Polyol bereits vor dem Eintritt in die Mischkammer mit Luft beladen, welche in gelöster Form im Polyol gebunden ist. Wenn das Polyol in die Mischkammer tritt und der Mischkammerdruck unter dem Sättigungsdruck der gelösten Luft liegt, perlt die Luft unter Ausbildung von kleinen Luftblasen aus. Diese Luftblasen bilden Keime für die Schaumstoffzellen. Jedoch hängt das Ausmaß des Ausperlens der Luft vom Mischkammerdruck ab, der bei einem diskontinuierlichen Ausdosieren Schwankungen unterliegt. Dies kann zu unterschiedlichen Qualitäten der Schaumstruktur des Polyurethans führen.

Die EP1958750A2 offenbart eine Vorrichtung und verfahren zum Ausgeben einer Mischung aus Gas und Flüssigkeit. Die US2009/236025A1 beschreibt eine Vorrichtung und ein Verfahren zur Herstellung geschäumter Materialien. Die US2020/307026A1 betrifft eine Vorrichtung und Verfahren zur Herstellung von Kunststoffteilen, insbesondere von Klebeapplikationen.

Aus der WO2016/087968 A1 ist eine Vorrichtung zum Beladen einer Kunststoffkomponente mit einem Gas bekannt. Die Vorrichtung umfasst einen Druckbehälter mit einem Mischer. Über eine Ventilvorrichtung wird Druckluft in den Druckbehälter gegeben, wobei die Ventilvorrichtung primär als Regel- bzw. Steueranschluss dient, um das Druckniveau im Druckbehälter auf einem gewünschten Niveau zu halten. Die Druckluft wird dabei über die Ventilvorrichtung in einem Abschnitt des Druckbehälters eingegeben, der oberhalb eines Flüssigkeitsspiegels der Kunststoffkomponente liegt. Darüber hinaus wird über einen unterhalb des Flüssigkeitsspiegels angeordneten Gasbeladungsring Druckluft unmittelbar in die flüssige Kunststoffkomponente eingedüst. Ein derartiges Beladen der Kunststoffkomponente mit Luft ist in der Regel sehr zeitaufwändig. Die Vorrichtung der WO2016/087968 A1 dürfte sich hingegen schwerlich für schnelle Anpassungen des Beladezustands abhängig von Prozessparametern eignen. Auch könnte es bei einem diskontinuierlichen Betrieb zu Problemen kommen. Beispielsweise besteht die Gefahr, dass die Kunststoffkomponente in den Gasbeladungsring eindringt und dort für Verunreinigungen oder Verstopfungen führt, wenn bei einer Pause zwischen zwei Dosiervorgängen die Druckluft abgeschaltet wird

Der Erfindung liegt daher die Aufgabe zu Grunde, eine geeignete Ventilvorrichtung für das Injizieren von Gas in eine Mischkammer einer Kunststoff-Dosiervorrichtung sowie eine Kunststoff-Dosiervorrichtung zum vorzugsweise diskontinuierlichen Ausdosieren eines aufgeschäumten oder schäumbaren Kunststoffes bereitzustellen.

Die der Erfindung zu Grunde liegende Aufgabe wird mit der Merkmalskombination gemäß Anspruch 1 und Anspruch 14 gelöst. Ausführungsbeispiele der Erfindung können den Unteransprüchen entnommen werden.

Erfindungsgemäß ist vorgesehen, dass die Ventileinrichtung ein Druckregelventil und ein Durchflussregler umfasst, wobei ein Eingang des Druckregelventils mit einem Auslass des Durchflussreglers verbunden ist und ein Auslass des Druckregelventils geeignet ist, vorzugsweise direkt in der Mischkammer zu münden. Dabei ist die Einmündung nicht als dahingehend eingeschränkt zu verstehen, dass der Auslass des Druckregelventils zwangsläufig angrenzend zur Mischkammer vorgesehen sein muss, um in diese zu münden. Selbstverständlich sind auch Ausführungsformen denkbar, bei denen sich eignende Verbindungsbereiche zwischen Auslass und Mischkammer zum Einsatz kommen, die ein einmünden ermöglichen, beispielsweise ein Kanal. Das Druckregelventil weist eine Ventilkammer auf und ein in der Ventilkammer verschiebbares Stellglied als Ventilkolben sowie eine mit dem Stellglied gekoppelte Kolbeneinheit. Durch die Kolbeneinheit lässt sich in Abhängigkeit eines Drucks in der Ventilkammer eine axiale Position des Stellglieds festlegen. Unter der Festlegung ist dabei nicht zwangsläufig eine aktive Positionierung des Stellglieds im Sinne einer direkten Steuerung des Stellglied zu verstehen. Vielmehr stellt sich die Stellgliedposition vorzugsweise aufgrund der vorherrschenden Kraftverhältnisse selbstständig ein. Beispielsweise lässt sich durch ein Gleichgewicht zwischen dem in der Ventilkammer herrschenden Druck und einem durch die Kolbeneinheit aufgebauten Druck eine Festlegung ermöglichen.

In einer bevorzugten Ausführungsform kann das Druckregelventil als Nadelventil ausgestaltet sein, wobei eine Ventilkammer sowie als Stellglied eine in der Ventilkammer verschiebbare Nadel sowie eine mit der Nadel gekoppelte Kolbeneinheit vorgesehen ist. Unter einem Nadelventil ist vorliegend ein Regelventil zu verstehen, bei dem durch Axialbewegung einer Nadel oder eines nadelartigen Stellgliedes ein Regelspalt beeinflusst wird. Alternativ kann das Druckregelventil auch als regelbares, insbesondere federvorgespanntes Rückschlagventil ausgestaltet sein.

Durch das Druckregelventil ist es möglich, dass am Ausgang des Durchflussreglers, der über den Einlass des Druckregelventils mit dessen Ventilkammer verbunden ist, ein konstanter Druck herrscht, welcher weitestgehend von dem Mischkammerdruck unabhängig ist. Wenn auch an einem Einlass des Durchflussreglers Mittel vorgesehen sind, den dort herrschenden Druck konstant zu halten, liegen beim Durchflussregler am Ein- und Auslass konstante Druckverhältnisse vor, wodurch die Bereitstellung eines sehr genauen Durchflusses möglich ist. Insgesamt kann so die erfindungsgemäße Ventileinrichtung eine sehr genaue Luftmenge pro Zeiteinheit bereitstellen. Mit dieser genau eingestellten Luftmenge lassen sich in der Mischkammer Kunststoffe mit einer guten und gleichbleibenden Schaumstruktur herstellen.

Der Durchflussregler ist vorzugsweise als Massendurchflussregler (MFC mass flow control) ausgebildet. Er ermittelt den Massendurchfluss, sodass Schwankungen in Druck und Temperatur keinen Einfluss auf das Regelungsergebnis haben. Vorzugsweise weist der Massendurchflussregler einen kalorimetrischen Durchflussmesser als Messaufnehmer auf.

Die Kolbeneinheit kann einen Druckführungskolben und einen Schließkolben aufweisen. Der Druckführungskolben dient dabei der Druckregelung. Auf den Druckführungskolben kann einerseits eine erste Kraft wirken, die von dem Druck in der Ventilkammer abhängig ist. Vorzugsweise ist die erste Kraft proportional zu dem in der Ventilkammer herrschenden Druck. Andererseits wirkt auf den Druckführungskolben eine zweite Kraft, die sich über Einstellmittel exakt einstellen lässt. Befindet sich der Druckführungskolben im Gleichgewicht, wird das Stellglied in der Ventilkammer nicht verschoben und steht still. Ist der Ventilkammerdruck zu klein, bewegt sich der Druckführungskolben und damit das mit ihm gekoppelte Stellglied in eine Richtung, wodurch sich die Strömungsverhältnisse im Druckregelventil derart ändern, dass der Ventilkammerdruck wieder ansteigt. Der Druckführungskolben bewegt sich daraufhin wieder in die andere Richtung, bis ein Gleichgewicht der ersten Kraft und der zweiten Kraft hergestellt ist. Dadurch lässt sich der Ventilkammerdruck regeln, dessen Höhe oder Sollwert von der eingestellten zweiten Kraft abhängt. Durch den Schließkolben lässt sich das Druckregelventil verschließen. Vorzugsweise lässt sich somit das Druckregelventil unabhängig von dem Ventilkammerdruck schließen.

Zwischen dem Druckführungskolben und einem vorzugsweise verstellbaren Widerlager kann ein Federelement angeordnet sein. Beispielsweise kann es sich bei dem Federelement um eine Schraubenfeder handeln. Bei dem Einsatz eines verstellbaren Widerlagers kann durch ein Verstellen des Widerlagers der Abstand zwischen Druckführungskolben und Widerlager verändert werden, sodass die Schraubenfeder mehr oder weniger zusammengedrückt wird. Entsprechend ändert sich die Kraft, die das Federelement bzw. die Schraubenfeder auf den Druckführungskolben ausübt. Alternativ zum Federelement oder zur Schraubenfeder kann die einstellbare zweite Kraft auch durch andere Mittel wie beispielsweise Pneumatik bereitgestellt werde Eine andere Möglichkeit ist der Einsatz eines nicht verstellbaren Widerlagers. Hierdurch kann eine besonders einfache Montage ermöglicht werden, die Kosten können gesenkt werden und eine Fehlbedienung kann ausgeschlossen werden.

In einem Ausführungsbeispiel drückt in einer Schließposition des Stellglieds der Schließkolben gegen den Druckführungskolben, der wiederum gegen das Stellglied drückt und diese in der Schließposition hält. Die Kraft, mit der der Schließkolben gegen den Druckführungskolben drückt, ist vorzugsweise deutlich größer (größer als Faktor 2 oder 5) als die Kraft, die durch das oben beschriebene Federelement auf den Druckführungskolben herrscht. Somit lässt sich das Druckregelventil schnell und zuverlässig durch den Schließkolben schließen.

Eine Feder kann den Schließkolben in eine Ruheposition drücken, in der der Schließkolben und der Druckführungskolben voneinander entkoppelt sind. In der Ruheposition des Schließkolbens wirken somit auf den Durchführungskolben keine Kräfte, die auf den Schließkolben zurückzuführen sind.

Das Stellglied, der Druckführungskolben und der Schließkolben können koaxial zueinander angeordnet sein. Zudem kann auch das vorzugsweise verstellbare Widerlager koaxial zum Druckführungskolben angeordnet sein. Beim Einsatz eines verstellbaren Widerlagers ist dieses vorzugsweise eine Schraubhülse, deren axiale Position über ein Schraubgewinde durch eine Drehbewegung eingestellt werden kann. Dadurch ist eine sehr genaue Einstellung der axialen Position des Widerlagers und somit des Drucks in der Ventilkammer möglich.

In einem Ausführungsbeispiel ist die Ventilkammer durch eine Membran begrenzt, welche zwischen dem Stellglied und der Kolbeneinheit angeordnet ist. Die Membran ermöglicht eine gute Abdichtung der Ventilkammer von der Kolbeneinheit. Die Membran kann eine spezielle Wellenstruktur aufweisen, die für einen guten Sitz und eine gute Abdichtung sorgen. In einer alternativen Ausführungsform ist eine Klemmung für die Membran vorgesehen. Dadurch wird die Membran gewellt, um für einen guten Sitz und eine gute Abdichtung zu ermöglichen.

Das Stellglied ist vorzugsweise mit der Kolbeneinheit durch Magnetkraft gekoppelt. Dabei können an zwei gegenüberliegenden Seiten der Membran Magnete angeordnet sein, wobei die Magnetkraft durch die Membran wirkt. Zur Befestigung des Stellglieds an der Kolbeneinheit ist es daher nicht notwendig, die dazwischen liegende Membran zu durchstoßen. Damit wird die Gefahr reduziert, dass die Membran undichte Stellen aufweist. Selbstverständlich ist auch der Einsatz eines Magneten an der einen Seite und eines ferromagnetischen Gegenstückes auf der gegenüberliegenden Seite denkbar.

In einem Ausführungsbeispiel ist das Stellglied aus Kunststoff, vorzugsweise aus PEEK. Dadurch ist eine gute Abdichtung zwischen dem Stellglied und einem Ventilgehäuse, das die Ventilkammer begrenzt, möglich, wenn sich das Stellglied in ihrer Schließposition befindet. Insbesondere ist dann nicht möglich, das Material, welches sich in der Mischkammer befindet, in das Druckregelventil eindringen kann.

Ein Volumen zwischen dem Ausgang des Durchflussreglers und dem Ausgang des Druckregelventils kann kleiner als 5 cm³, vorzugsweise kleiner als 1 cm³ sein. Dadurch lassen sich schädliche Kompressibilitätseffekte des (Gas-)Volumens gering halten, welche die genaue Regelung der injizierten Luftmenge erschweren.

Zwischen dem Auslass des Durchflussreglers und dem Einlass des Druckregelventils kann ein Rückschlagventil vorgesehen sein. Das Rückschlagventil verhindert, dass bei einem defekten Druckregelventil Material aus der Mischkammer in den üblicherweise sehr sensiblen Durchflussregler gelangt.

Vor dem Einlass des Durchflussreglers kann eine Boostereinheit vorgesehen sein, der den Luftdruck eines üblichen Druckluftversorgungsnetzes von etwa 5 bis 7 bar auf ca. 7 bis 30 bar verdichtet. Um etwaige Druckschwankungen, welche im Betrieb der Boostereinheit entstehen können, kann ein gro-βes Puffervolumen zwischen Boostereinheit und dem Eingang des Durchflussreglers vorgesehen sein. Das große Puffervolumen lässt sich beispielsweise durch Schlauchstücke mit einem übergro-βen Durchmesser und großer Länge erreichen.

Die erfindungsgemäße Kunststoff-Dosiervorrichtung zum vorzugsweise diskontinuierlichen Ausdosieren eines aufschäumbaren oder aufgeschäumten Kunststoffes weist eine Ventilvorrichtung auf, wie sie oben in den verschiedenen Ausführungen beschrieben worden ist. Das diskontinuierliche Ausdosieren soll dabei die Fälle abdecken, bei denen für ein begrenztes Zeitinterwall beispielsweise von wenigen Sekunden der Kunststoff mit einer konstanten Ausbringung (Gewicht/Zeiteinheit) ausdosiert wird. Einer solchen Ausdosierung kann eine Pause folgen, in der kein Kunststoff ausdosiert wird. Das diskontinuierliche Ausdosieren kann somit eine Folge von unterschiedlichen langen Dosiervorgängen und dazwischen angeordneten, unterschiedlichen langen Dosierpausen sein. Es ist auch möglich, dass die Ausbringung während eines Dosiervorgangs oder von Dosiervorgang zu Dosiervorgang variiert.

Anhand der in der Zeichnung dargestellten Ausführungsbeispiele wird die Erfindung näher erläutert. Es zeigen:
- Figur 1: eine erfindungsgemäße Kunststoff-Dosiervorrichtung;
- Figur 2: eine Mischvorrichtung der Kunststoff-Dosiervorrichtung; und
- Figur 3: ein Druckregelventil als Teil einer erfindungsgemäßen Ventilvorrichtung.

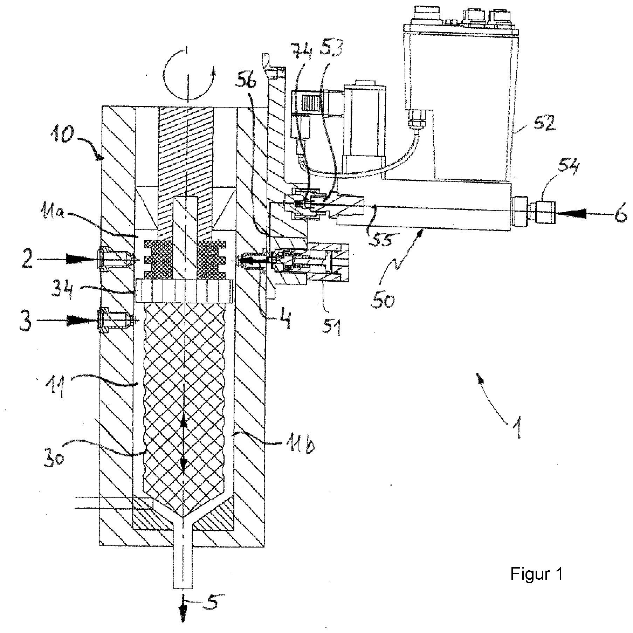

Figur 1 zeigt eine Kunststoff-Dosiervorrichtung, die in ihrer Gesamtheit mit 1 bezeichnet wird. Die Kunststoff-Dosiervorrichtung 1 dient zum vorzugsweise diskontinuierlichen Ausdosieren eines Kunststoffes, der bei der Ausdosierung aus der Kunststoff-Dosiervorrichtung 1 bereits (teilweise) aufgeschäumt ist oder nach der Ausdosierung (weiter) aufschäumt.

Die Kunststoff- Dosiervorrichtung 1 umfasst eine Mischvorrichtung 10 und eine Ventilvorrichtung 50. In die Mischvorrichtung 10 lässt sich eine erste Komponente 2 und eine zweite Komponente 3 einer Mischkammer 11 zuführen, in der ein drehbarer gelagerter Rührer 30 angeordnet ist. In der Mischkammer 11 werden die beiden Komponenten 2, 3 miteinander vermischt, wobei ein Kunststoff 5 entsteht. Beispielsweise kann es sich bei ersten Komponente 2 um ein Gemisch aus Polyol und Wasser handeln, das mit Isocyanat als zweite Komponente 3 in der Mischkammer 11 zu Polyurethan reagiert. Dabei entsteht CO₂, wodurch das Polyurethan aufschäumt bzw. nach dem Ausdosieren aus der Mischkammer 11 (weiter) aufschäumen kann.

Zusätzlich wird der Mischkammer 11 ein Gas 4 zugeführt, dessen Menge genau durch die Ventilvorrichtung 50 geregelt wird. Die Ventilvorrichtung 50 weist dazu ein Druckregelventil 51 und ein Durchflussregler in Form eines Massendurchflussreglers 52 auf, die durch eine Anschlusseinheit 53 miteinander verbunden sind. An einem Einlass 54 des Massendurchflussreglers 52 wird ein unter Druck stehendes Quellgas 6 zugeführt.

Das Gas 4 wird direkt in einen ersten Mischbereich 11 a der Mischkammer 11 injiziert und durch den Rührer 30 in der ersten Komponente 2 vermischt bzw. fein zerteilt. Dadurch entstehen kleine Mikroblasen in der ersten Komponente 2. Das Vorgemisch strömt dann über einen Spalt 34 in einen zweiten Mischbereich 11b der Mischkammer 11. Die Mikroblasen begünstigen dabei eine besonders homogene und feine Schaumstruktur, was weiter unten noch ausführlicher beschrieben wird.

Ein Auslass 55 des Massendurchflussreglers 52 ist über die Anschlusseinheit 53 mit einem Einlass 56 des Druckregelventils 51 verbunden.

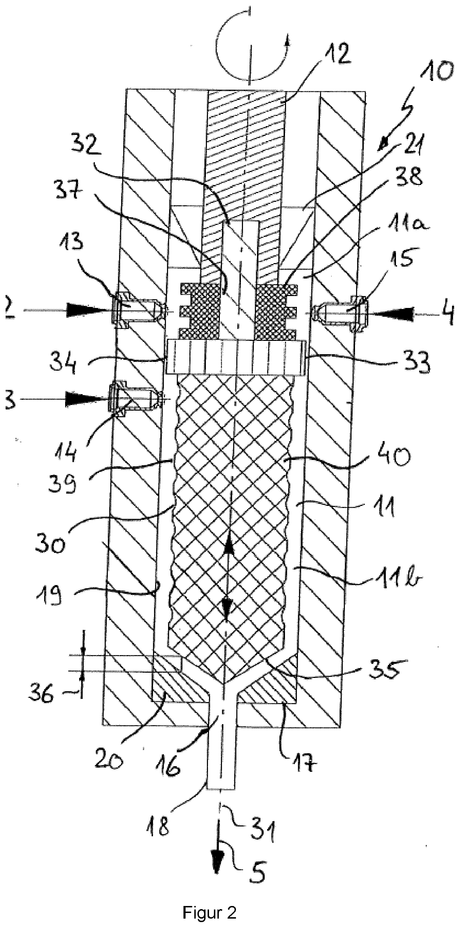

Figur 2 zeigt die Mischvorrichtung 10 in Alleinstellung. Der Rührer 30 ist im Wesentlichen rotationssymmetrisch zu einer Drehachse 31 ausgeführt. Angetrieben wird der Rührer 30 durch eine nur teilweise dargestellte Antriebswelle 12. Zur Verbindung mit der Antriebswelle 12 weist der Rührer 30 einen zapfenförmigen Wellenanschluss 32 auf. Vorzugsweise handelt es sich bei der Verbindung zwischen der Antriebswelle 12 und dem Wellenanschluss 32 um eine kraftschlüssige Verbindung.

In dem Gehäuse der Mischvorrichtung 1 sind drei Einlassöffnungen vorgesehen: zum einen handelt es sich um eine erste Einlassöffnung 13, durch die die erste Komponente 2 der Mischkammer 11 zugeführt werden kann. Eine zweite Einlassöffnung 14 für die zweite Komponente 3 ist in einem axialen Abstand zu der ersten Einlassöffnung 13 vorgesehen. Der axiale Abstand zwischen der ersten Einlassöffnung und der zweiten Einlassöffnung 14 kann wenige Millimeter betragen, beispielsweise 3 bis 20 mm.

Auf gleicher axialer Höhe zu der ersten Einlassöffnung 13 ist eine Gas-Einlassöffnung 15 vorgesehen, durch die das Gas 4 in die Mischkammer 11 eingedüst werden kann. Bei dem Gas 4 handelt es sich vorzugsweise um Luft (das Gas kann auch Stickstoff oder CO₂ sein).

Durch eine Auslassöffnung 16, welche koaxial zur Drehachse 31 angeordnet ist und sich an einem axialen Ende 17 der Mischkammer 11 befindet, tritt der Kunststoff bzw. Polyurethanschaum aus der Mischkammer 11. Die Auslassöffnung 16 wird durch eine Düse 18 gebildet. Ein Innendurchmesser der Düse 18 kann beispielsweise 1 bis 8 mm oder 2 bis 5 mm betragen. Eine Länge der Düse 18 kann 2 bis 50 mm oder 30 mm betragen. Der hergestellte Kunststoff tritt in axialer Richtung aus der Mischkammer 11.

Der Rührer 30 weist einen zylindrischen Wellenbund 33 auf, dessen Außendurchmesser etwas kleiner ist als ein Innendurchmesser der zylindrischen Mischkammer 11. Der radiale Spalt 34 zwischen Wellenbund 33 und einer Mischkammerwandung 19 kann als Teil einer Drossel oder Strömungsbremse aufgefasst werden, durch die die Mischkammer 11 in den ersten Mischbereich 11a und den zweiten Mischbereich 11b getrennt wird.

In axialer Richtung (in Richtung der Drehachse 31) lässt sich der Rührer 30 verschieben. Figur 2 zeigt den Rührer 30 in einer axialen Position, in der zwischen einer konischen Rührerspitze 35 des Rührers 30 und einem trichterförmige Einsatz 20, der am axialen Ende 17 der Mischkammer 11angeordnet ist, ein Auslassspalt 36 gegeben ist. Somit ist es möglich, dass der Kunststoff, der in der Mischkammer 11 hergestellt worden ist, durch die Düse 18 aus der Mischvorrichtung 1 treten kann. In einer Schließposition setzt die konische Rührerspitze 35 auf dem Einsatz 20 auf, wodurch der Auslassspalt 36 verschlossen wird. In der Schließposition des Rührers 30 ist somit die Auslassöffnung 16 verschlossen. Die axiale Ausdehnung des Spalts zwischen der Rührerspitze 35 und dem Einsatz 20 kann Werte zwischen 0 mm (Schließposition) und 2,5 mm annehmen. Die axiale Position des Rührers 30 bzw. die axiale Ausdehnung des Auslassspalts 36 kann für die Einstellung eines bestimmten Drucks in der Mischkammer 11 verwendet werden. Mittel zur genauen Einstellung der axialen Position des Rührers 30 sind in Figur 2 nicht dargestellt.

Der axiale Hub oder Spalt (Differenz zwischen Schließposition und einer oberen Endposition) ist so bemessen, dass der Wellenbund 33 bzw. die Strömungsbremse sich in axialer Richtung gesehen immer zwischen der ersten Einlassöffnung 13 und der zweiten Einlassöffnung 14 befindet. Somit münden die erste Einlassöffnung 13 und die hier in diesem Ausführungsbeispiel um 180° versetzte Gas-Einlassöffnung immer in den ersten Mischbereich 11a der Mischkammer 11. Die zweite Einlassöffnung 14 mündet hingegen unabhängig von der axialen Position des Rührers 30 immer in den zweiten Mischbereich 11b.

Zur Zerteilung des Gases 4 und/oder zur Vermischung mit der ersten Komponente 2 weist der Rührer 30 an einem ersten axialen Abschnitt 37 erste Mittel 38 auf. Der erste axiale Abschnitt 37 des Rührers 30 liegt in dem ersten Mischbereich 11a der Mischkammer 11. Der erste Mischbereich 11a wird von dem Wellenbund 33 und einer Dichtung 21 begrenzt, die zwischen der Antriebswelle 12 und der Mischkammerwandung 19 eingesetzt ist. In einem zweiten axialen Abschnitt 39, der sich von dem Wellenbund 33 bis zu der Rührerspitze 35 erstreckt, sind zweite Mittel 40 vorgesehen, um ein Vorgemisch, umfassend die erste Komponente 2 und das Gas 4, mit der zweiten Komponente 3 zu vermischen. Der zweite axiale Abschnitt 39 liegt in dem zweiten Mischbereich 11b der Mischkammer 11. Die ersten Mittel 38 und die zweiten Mittel 40 können radial nach außen stehende Vorsprünge aufweisen, die durch das entsprechende Material in der Mischkammer 11 pflügen, wenn sich der Rührer 30 dreht.

Bevor auf das Druckregelventil 51 der Ventilvorrichtung 50 näher eingegangen wird, soll der Betrieb der Mischkammer 1 anhand der Ausdosierung des Polyurethans bzw. des Polyurethanschaums 5 kurz beschrieben werden: durch die erste Einlassöffnung 13 wird Polyol mit Wasser als erste Komponente 2 dem ersten Mischbereich 11a zugeführt. Gleichzeitig wird durch die Gas-Einlassöffnung 15 Luft in den ersten Mischbereich 11a injiziert. Durch die Drehung des Rührers 30 und damit auch durch Drehung der ersten Mittel 38 wird das injizierte Gas 4 in der ersten Komponente 2 zerteilt. Dadurch entstehen kleine Mikroblasen aus Gas, die in der ersten Komponente 2 fein verteilt vorliegen. Die Drehzahl des Rührers kann 1000 bis 6000 U/min oder 1500 bis 4000 U/min betragen.

Aufgrund des in dem ersten Mischbereich 11a gegebenen Druck gelangt das Vorgemisch aus dem ersten Mischbereich 11a durch den radialen Spalt 34 in den zweiten Mischbereich 11b. Dort wird das Vorgemisch (Polyol, Wasser, Mikroblasen) mit Isocyanat (zweite Komponente 3) durch die zweiten Mittel 40 vermischt. Bei der Reaktion von Polyol, Wasser und Isocyanat ersteht neben dem Polyurethan auch CO₂. Die Mikroblasen fungieren dabei als Keime für die Bildung von CO₂-Blasen, durch die in dem Polyurethan Schaumzellen gebildet werden. Durch die Auslassöffnung 16 kann das Polyurethan aus der Mischkammer 11ausdosiert werden. Aufgrund der Drosselwirkung der Strömungsbremse bzw. des radialen Spalts 34 ergibt sich ein (kleines) Druckgefälle zwischen dem ersten Mischbereich 11a und dem zweiten Mischbereich 11b. Das Druckgefälle sorgt dafür, dass es praktisch keine Strömung von dem zweiten Mischbereich 11b in den ersten Mischbereich 11a gibt. Somit wird vermieden, dass Isocyanat oder ein Gemisch aus Isocyanat, Polyol und Wasser in der ersten Mischbereich 11a gelangt und dort zu unerwünschten Verunreinigungen führt.

Wenn ein Dosiervorgang beendet werden soll, wird der Rührer 30 von der in der Figur 2 gezeigten Position in die Schließposition verschoben, um die Auslassöffnung 16 zu verschließen. Dabei wird die Antriebswelle 12 abgebremst, so dass der Rührer 30 nicht mehr innerhalb der Mischkammer 11 rotiert. Das axiale Absenken der Rührerspitze 35 bis zur Anlage auf dem Einsatz 20 und das Auslaufen des Rührers 30 können dabei so aufeinander abgestimmt sein, dass die Rührerspitze 35 den Einsatz 20 durch eine Restdrehung säubert und freiräumt. Gleichzeitig wird die Ventilvorrichtung 50 geschlossen, um zu verhindern, dass Polyol in die Ventilvorrichtung 50 gelangt oder dass sich in dem ersten Mischbereich 11 zu viel Gas anhäuft. Durch die verschlossene Ventilvorrichtung 51 und die verschlossene Ausgangsöffnung 16 ist die Mischkammer nach Beendigung des Dosiervorgangs von der Umgebung abgeriegelt. Zu Beginn eines weiteren Dosiervorgangs werden wieder die beiden Komponenten 2, 3 und das Gas 4 bei wieder sich drehenden und axial verschobenen Rührer 30 in die Mischkammer eingegeben.

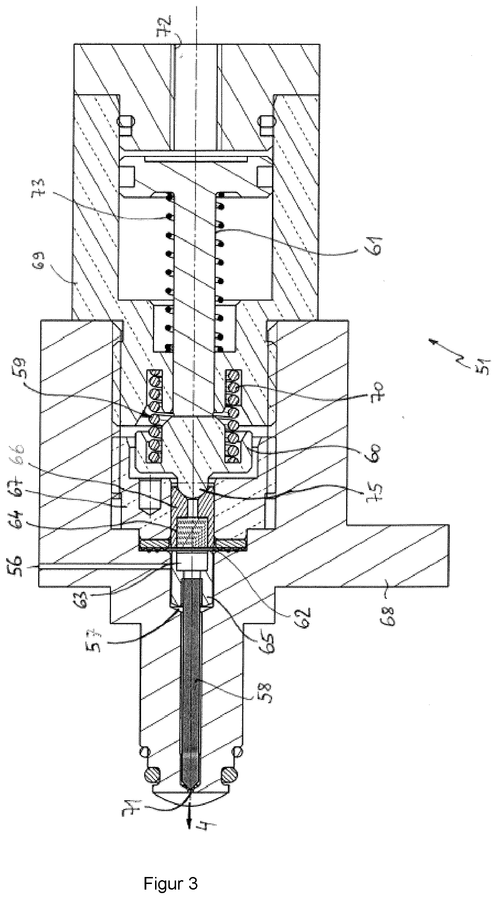

Figur 3 zeigt das Druckregelventil 51 in einem vergrößerten Maßstab. Das Druckregelventil 51 ist als Nadelventil ausgeführt, dass eine Ventilkammer 52, eine in der Ventilkammer 52 verschiebbare Nadel 58 als Stellglied sowie eine mit der Nadel 58 gekoppelte Kolbeneinheit 59 aufweist. Die Kolbeneinheit 59 weist einen Druckführungskolben 60 und einen Schließkolben 61 auf. Zwischen der Kolbeneinheit 59 und der Nadel 58 ist eine Membran 62 angeordnet, die die Ventilkammer 57 begrenzt und abgedichtet.

Die Kopplung zwischen der Nadel 58 und der Kolbeneinheit 59 erfolgt durch zwei Magnete 63, 64, die als Scheibenmagnete aus Neodym ausgeführt sind. Die Magnetkraft zwischen diesen beiden Magneten wirkt durch die Membran 62. Der Nadel 58 ist über eine Nadelfassung 65 fest mit dem Magnet 63 verbunden, beispielsweise mittels einer Klebeverbindung. Der Magnet 64 ist in einem Zwischenstück 66 eingesetzt, an der eine Kugelkalotte 75 des Druckführungskolbens 60 anliegt. Durch eine Gewindemuffe 67 ist die Membran 62 in einem Ventilgehäuse 68 fixiert.

Zwischen dem Druckführungskolben 60 und einem axial verstellbaren Widerlager 69 in Form einer Schraubhülse ist eine Schraubenfeder 70 angeordnet, die den Druckführungskolben 60 und somit auch die Nadel 58 in der Darstellung der Figur 3 nach links drückt. Die Kraft, mit der die Schraubenfeder 70 gegen den Druckführungskolben 60 drückt, hängt von der der axialen Position der Schraubhülse 69 ab. Die axiale Position lässt sich durch Verschrauben der Schaubhülse 69 genau einstellen.

Wird die Nadel 58 ganz nach links verschoben, befindet sie sich in einer Schließposition, in der ein Auslass 71 des Druckregelventils 51 verschlossen ist. Über die Membran 62 und das Zwischenstück 66 wirkt auf den Druckführungskolben 60 eine der Kraft der Schraubenfeder 70 entgegengesetzte Kraft, die von dem Druck in der Ventilkammer 57 bzw. von dem Druck am Eingang 56 des Druckregelventils 51 abhängt. Steht der Druckführungskolben 60 im Kräftegleichgewicht, so wird die Nadel 58 innerhalb der Ventilkammer 57 nicht bewegt. Fällt der Druck in der Ventilkammer 57 ab, reduziert sich auch die Kraft, die den Druckführungskolben 60 in der Darstellung der Figur 3 nach rechts drückt. Entsprechend wird durch die nun nicht mehr voll kompensierte Kraft der Schraubenfeder die Nadel 58 nach rechts verschoben, wodurch der Auslass 71 verschlossen wird bzw. der Strömungsquerschnitt am Auslass 71 verkleinert wird. Dies lässt den Druck in der Ventilkammer 57 wieder steigen mit der Folge, dass sich das Kräftegleichgewicht am Druckführungskolben 60 wieder einstellt.

Der Schließkolben 61 dient dazu, den Auslass 71 des Druckregelventils 51 zu verschließen, wenn ein Dosiervorgang an der Kunststoff-Dosiervorrichtung 1 und damit auch die Zuführung des Gases 4 beendet werden sollen. In diesem Fall wird der Schließkolben 61 durch eine Luftzufuhr 72 mit Druckluft beaufschlagt, sodass der Schließkolben gegen die Kraft einer weiteren Schraubenfeder 73 gegen den Druckführungskolben 60 drückt. Dadurch wird das ansonsten herrschende Kräftegleichgewicht zwischen dem Druck in der Ventilkammer 57 und der Kraft der Schraubenfeder 70 überstimmt. Die Nadel 58 wird somit unabhängig von dem Druck in der Ventilkammer 57 in die Schließposition bewegt und dort gehalten. Soll aus dem Druckregelventil 51 wieder Gas 4 strömen, wird die Druckluftbeaufschlagung des Schließkolbens 61 beendet. Die Schraubenfeder 73 drückt dann den Schließkolben wieder in eine Ruhestellung, in der der Schließkolben 61 keine Kraft auf den Druckführungskolben 60 ausübt.

Die Anschlusseinheit 53, die zwischen dem Auslass 55 des Massendurchflussreglers 52 und dem Einlass 56 des Druckregelventils 51 angeordnet ist, umfasst ein Rückschlagventil 74 (siehe Figur 1), das den Massendurchflussregler 52 vor einem Eintritt der ersten Komponente 2 schützt, sollte das Druckregelventil 51 beschädigt sein und den Durchfluss der ersten Komponente 2 durch die Ventilkammer 57 nicht verhindern können.

### Bezugszeichenliste

- 1: Mischkammer
- 2: erste Komponente
- 3: zweite Komponente
- 4: Gas
- 5: Kunststoff (Polyurethanschaum)
- 6: Quellgas

- 10: Mischvorrichtung
- 11: Mischkammer (11a erster Mischbereich; 11b zweiter Mischbereich)
- 12: Antriebswelle
- 13: erste Einlassöffnung
- 14: zweite Einlassöffnung
- 15: Gas-Einlassöffnung
- 16: Auslassöffnung
- 17: axiales Ende
- 18: Düse
- 19: Mischkammerwandung
- 20: Einsatz
- 21: Dichtung

- 30: Rührer
- 31: Drehachse
- 32: zapfenförmiger Wellenanschluss
- 33: Wellenbund
- 34: radialer Spalt
- 35: Rührerspitze
- 36: Auslassspalt
- 37: erster axialer Abschnitt
- 38: erste Mittel
- 39: zweiter axiale Abschnitt
- 40: zweite Mittel

- 50: Ventilvorrichtung
- 51: Druckregelventil
- 52: Durchflussregler/Massendurchflussregler
- 53: Anschlusseinheit
- 54: Einlass des Massendurchflussreglers
- 55: Auslass des Massendurchflussreglers
- 56: Einlass des Druckregelventils
- 57: Ventilkammer
- 58: Nadel
- 59: Kolbeneinheit
- 60: Druckführungskolben
- 61: Schließkolben
- 62: Membran
- 63: Magnet
- 64: Magnet
- 65: Nadelfassung
- 66: Zwischenstück
- 67: Gewindemuffe
- 68: Ventilgehäuse
- 69: Widerlager/Schraubhülse
- 70: Schraubenfeder
- 71: Auslass des Druckregelventils
- 72: Luftzufuhr
- 73: Schraubenfederkolbeneinheit

- 74: Rückschlagventil
- 75: Kugelkalotte

## Patentansprüche

1. Ventilvorrichtung (50) für das Injizieren von Gas (4) in eine Mischkammer (11) einer Kunststoff-Dosiervorrichtung (1) zur Gasbeladung wenigstens einer in der Mischkammer (11) befindlichen Komponente (2), wobei
die Ventilvorrichtung (50) ein Druckregelventil (51) und ein Durchflussregler (52) umfasst, wobei das Druckregelventil (51) eine Ventilkammer (57), ein in der Ventilkammer (57) verschiebbares Stellglied (58) und eine mit dem Stellglied (58) gekoppelte Kolbeneinheit (59) aufweist, durch die in Abhängigkeit eines Drucks in der Ventilkammer (57) eine axiale Position des Stellglieds (58) festlegbar ist,
**dadurch gekennzeichnet,**
**dass** ein Eingang (56) des Druckregelventils (51) mit einem Auslass (55) des Durchflussreglers (52) verbunden ist und ein Auslass (71) des Druckregelventils (51) geeignet ist, vorzugsweise direkt in der Mischkammer (11) zu münden.

2. Vorrichtung (50) nach Anspruch 1, **dadurch gekennzeichnet, dass** die Kolbeneinheit (59) einen Druckführungskolben (60) und einen Schließkolben (61) aufweist, wobei der Druckführungskolben (60) der Druckregelung und der Schließkolben (61) dem Verschließen des Druckregelventils (51) dienen.

3. Ventilvorrichtung (50) nach Anspruch 2, **dadurch gekennzeichnet, dass** zwischen dem Druckführungskolben (60) und einem vorzugsweise verstellbaren Widerlager (69) ein Federelement angeordnet ist.

4. Ventilvorrichtung (50) nach Anspruch 2 oder 3, **dadurch gekennzeichnet, dass** in einer Schließposition des Stellglieds (58) der Schließkolben (61) gegen den Druckführungskolben (60) drückt, der wiederum gegen das Stellglied (58) drückt und diese in der Schließposition hält.

5. Ventilvorrichtung (50) nach Anspruch 3 oder 4, **dadurch gekennzeichnet, dass** eine Feder (73) den Schließkolben (61) in eine Ruheposition drückt, in der Schließkolben (61) und Druckführungskolben (60) voneinander entkoppelt sind.

6. Ventilvorrichtung (50) nach einem der Ansprüche 2 bis 5, **dadurch gekennzeichnet, dass** das Stellglied (58), der Druckführungskolben (60) und der Schließkolben (61) koaxial zueinander angeordnet sind.

7. Ventilvorrichtung (50) nach einem der Ansprüche 1 bis 6, **dadurch gekennzeichnet, dass** die Ventilkammer (57) durch eine Membran (62) begrenzt ist, welche zwischen dem Stellglied (58) und der Kolbeneinheit (59) anordnet ist.

8. Ventilvorrichtung (50) nach Anspruch 7, **dadurch gekennzeichnet, dass** das Stellglied (58) mit der Kolbeneinheit (59) durch Magnetkraft gekoppelt ist.

9. Ventilvorrichtung (50) nach Anspruch 7 oder 8, **dadurch gekennzeichnet, dass** an zwei gegenüberliegenden Seiten der Membran (62) Magnete (63, 64) angeordnet sind oder dass an einer Seite der Membran (62) ein Magnet und an der gegenüberliegenden Seite ein ferromagnetisches Gegenstück angeordnet sind, wobei die Magnetkraft bei jeweils durch die Membran (62) wirkt.

10. Ventilvorrichtung (50) nach einem der Ansprüche 1 bis 9, **dadurch gekennzeichnet, dass** das Stellglied (58) aus Kunststoff, vorzugsweise PEEK ist.

11. Ventilvorrichtung (50) nach einem der Ansprüche 1 bis 10, **dadurch gekennzeichnet, dass** ein Volumen zwischen dem Auslass (55) des Durchflussreglers (52) und dem Auslass (71) des Druckregelventils (51) kleiner als 5 cm³, vorzugsweise kleiner 1 cm³ ist.

12. Ventilvorrichtung (50) nach einem der Ansprüche 1 bis 11, **dadurch gekennzeichnet, dass** zwischen dem Auslass (55) des Durchflussreglers (52) und dem Einlass (56) des Druckregelventils (51) ein Rückschlagventil (74) vorgesehen ist.

13. Ventilvorrichtung (50) nach einem der Ansprüche 1 bis 12, **dadurch gekennzeichnet, dass** der Durchflussregler (52) als Massendurchflussregler (52), vorzugsweise aufweisend einen kalorimetrischen Durchflussmesser als Messaufnehmer, ausgebildet ist.

14. Dosiervorrichtung (1) zum vorzugsweise diskontinuierlichen Ausdosieren eines aufgeschäumten und aufschäumbaren Kunststoffes (5), umfassend eine Ventilvorrichtung (50) nach einem der Ansprüche 1 bis 13.

## Claims

1. A valve device (50) for injecting gas (4) into a mixing chamber (11) of a plastics-dosing device (1) for gas loading of at least one component (2) located in the mixing chamber (11),
the valve device (50) comprising a pressure-control valve (51) and a flow controller (52), the pressure-control valve (51) having a valve chamber (57), an actuator (58) movable in the valve chamber (57), and a piston unit (59) coupled to the actuator (58), by means of which an axial position of the actuator (58) can be fixed depending on a pressure in the valve chamber (57),
**characterized in that**
an inlet (56) of the pressure-control valve (51) is connected to an outlet (55) of the flow controller (52) and an outlet (71) of the pressure-control valve (51) is suitable for opening, preferably directly, into the mixing chamber (11).

2. The device (50) according to claim 1, **characterized in that** the piston unit (59) has a pressure-control piston (60) and a closing piston (61), the pressure-control piston (60) being intended to control the pressure and the closing piston (61) being intended to close the pressure-control valve (51).

3. The valve device (50) according to claim 2, **characterized in that** a spring element is arranged between the pressure-control piston (60) and a preferably adjustable abutment (69).

4. The valve device (50) according to claim 2 or 3, **characterized in that,** in a closed position of the actuator (58), the closing piston (61) presses against the pressure-control piston (60), which in turn presses against the actuator (58) and holds it in the closed position.

5. The valve device (50) according to claim 3 or 4, **characterized in that** a spring (73) presses the closing piston (61) into a rest position in which the closing piston (61) and pressure-control piston (60) are decoupled from one another.

6. The valve device (50) according to one of claims 2 to 5,
**characterized in that** the actuator (58), the pressure-control piston (60) and the closing piston (61) are arranged coaxially with one another.

7. The valve device (50) according to one of claims 1 to 6,
**characterized in that** the valve chamber (57) is delimited by a membrane (62) which is arranged between the actuator (58) and the piston unit (59).

8. The valve device (50) according to claim 7, **characterized in that** the actuator (58) is coupled to the piston unit (59) by magnetic force.

9. The valve device (50) according to claim 7 or 8, **characterized in that** magnets (63, 64) are arranged on two opposite sides of the membrane (62) **or in that** a magnet is arranged on one side of the membrane (62) and a ferromagnetic counterpart is arranged on the opposite side, the magnetic force acting through the membrane (62) in each case.

10. The valve device (50) according to one of claims 1 to 9,
**characterized in that** the actuator (58) is made from plastics material, preferably PEEK.

11. The valve device (50) according to one of claims 1 to 10,
**characterized in that** a volume between the outlet (55) of the flow controller (52) and the outlet (71) of the pressure-control valve (51) is less than 5 cm³, preferably less than 1 cm³.

12. The valve device (50) according to one of claims 1 to 11,
**characterized in that** a check valve (74) is provided between the outlet (55) of the flow controller (52) and the inlet (56) of the pressure-control valve (51).

13. The valve device (50) according to one of claims 1 to 12,
**characterized in that** the flow controller (52) is designed as a mass flow controller (52), preferably having a calorimetric flow meter in the form of a measuring sensor.

14. A dosing device (1) for preferably discontinuous dosing of a foamed and foamable plastics material (5), comprising a valve device (50) according to one of claims 1 to 13.

## Revendications

1. Dispositif à soupapes (50) pour l'injection de gaz (4) dans une chambre de mélange (11) d'un dispositif de dosage (1) en matière plastique pour le chargement en gaz d'au moins un composant (2) se trouvant dans la chambre de mélange (11), dans lequel
le dispositif à soupapes (50) comprend une soupape de régulation de pression (51) et un régulateur de débit (52), dans lequel la soupape de régulation de pression (51) présente une chambre de soupape (57), un organe de réglage (58) déplaçable dans la chambre de soupape (57) et une unité à pistons (59) accouplée à l'organe de réglage (58), par laquelle unité à pistons une position axiale de l'organe de réglage (58) peut être établie en fonction d'une pression dans la chambre de soupape (57),
**caractérisé en ce**
**qu'**une entrée (56) de la soupape de régulation de pression (51) est reliée à une sortie (55) du régulateur de débit (52) et une sortie (71) de la soupape de régulation de pression (51) est apte à déboucher, de préférence directement, dans la chambre de mélange (11).

2. Dispositif (50) selon la revendication 1, **caractérisé en ce que** l'unité à pistons (59) présente un piston de guidage de pression (60) et un piston de fermeture (61), dans lequel le piston de guidage de pression (60) sert à la régulation de pression et le piston de fermeture (61) sert à la fermeture de la soupape de régulation de pression (51).

3. Dispositif à soupapes (50) selon la revendication 2, **caractérisé en ce qu'**un élément formant ressort est agencé entre le piston de guidage de pression (60) et une butée (69) de préférence réglable.

4. Dispositif à soupapes (50) selon la revendication 2 ou 3,
**caractérisé en ce que,** dans une position de fermeture de l'organe de réglage (58), le piston de fermeture (61) appuie contre le piston de guidage de pression (60), qui appuie à son tour contre l'organe de réglage (58) et maintient ce dernier dans la position de fermeture.

5. Dispositif à soupapes (50) selon la revendication 3 ou 4, **caractérisé en ce qu'un** ressort (73) appuie sur le piston de fermeture (61) dans une position de repos dans laquelle le piston de fermeture (61) et le piston de guidage de pression (60) sont désaccouplés l'un de l'autre.

6. Dispositif à soupapes (50) selon l'une des revendications 2 à 5, **caractérisé en ce que** l'organe de réglage (58), le piston de guidage de pression (60) et le piston de fermeture (61) sont agencés de manière coaxiale les uns par rapport aux autres.

7. Dispositif à soupapes (50) selon l'une des revendications 1 à 6, **caractérisé en ce que** la chambre de soupape (57) est délimitée par une membrane (62), laquelle est agencée entre l'organe de réglage (58) et l'unité à pistons (59).

8. Dispositif à soupapes (50) selon la revendication 7,
**caractérisé en ce que** l'organe de réglage (58) est accouplé à l'unité à pistons (59) par une force magnétique.

9. Dispositif à soupapes (50) selon la revendication 7 ou 8,
**caractérisé en ce que** des aimants (63, 64) sont agencés sur deux côtés opposés de la membrane (62) **ou en ce qu'**un aimant est agencé sur un côté de la membrane (62) et une contrepartie ferromagnétique est agencée sur le côté opposé, dans lequel la force magnétique agit à travers la membrane (62) respectivement.

10. Dispositif à soupapes (50) selon l'une des revendications 1 à 9, **caractérisé en ce que** l'organe de réglage (58) est en matière plastique, de préférence en PEEK.

11. Dispositif à soupapes (50) selon l'une des revendications 1 à 10, **caractérisé en ce qu'**un volume entre la sortie (55) du régulateur de débit (52) et la sortie (71) de la soupape de régulation de pression (51) est inférieur à 5 cm³, de préférence inférieur à 1 cm³.

12. Dispositif à soupapes (50) selon l'une des revendications 1 à 11, **caractérisé en ce qu'**une soupape antiretour (74) est prévue entre la sortie (55) du régulateur de débit (52) et l'entrée (56) de la soupape de régulation de pression (51).

13. Dispositif à soupapes (50) selon l'une des revendications 1 à 12, **caractérisé en ce que** le régulateur de débit (52) est réalisé comme un régulateur de débit massique (52), présentant de préférence un débitmètre calorimétrique comme capteur de mesure.

14. Dispositif de dosage (1) pour le dosage, de préférence discontinu, d'une matière plastique (5) expansée et expansible, comprenant un dispositif à soupapes (50) selon l'une des revendications 1 à 13.
